# EUROPÄISCHE PATENTANMELDUNG

(11) **EP 3 547 402 A1**
(43) Veröffentlichungstag der Anmeldung: **02.10.2019**
(21) Anmeldenummer: 19165085.2
(22) Anmeldetag: 26.03.2019
(51) Int. Cl.: H01M 2/20

(54) **BATTERIEMODUL FÜR EIN KRAFTFAHRZEUG**

(30) Priorität: 26.03.2018 DE 102018107091
(71) Anmelder: Deutsche Post AG, 53113 Bonn (DE)
(72) Erfinder: Hartmann, Stephan, 4500 Solothurn (CH); Armbruster, Nils, 8049 Zürich (CH); Lorca Mouliaá, Alejandro, 4051 Basel (CH)
(74) Vertreter: Michalski Hüttermann & Partner Patentanwälte mbB

(57) **Zusammenfassung**

Gegenstand der Erfindung ist ein Batteriemodul für ein Kraftfahrzeug mit einer Mehrzahl Batteriezellen (2) jeweils aufweisend einen ersten Pol (3) und einen zweiten Pol (4) und einem sich in eine Querrichtung und in eine Längsrichtung erstreckenden Kontaktblech (1), wobei ein erster Teil (5) der Batteriezellen (2) mit dem jeweiligen ersten Pol (3) nacheinander mit einer sich in die Längsrichtung erstreckenden ersten Seite (7) des Kontaktblechs (1) verbunden ist und ein restlicher zweiter Teil (8) der Batteriezellen (2) mit dem jeweiligen zweiten Pol (4) nacheinander mit einer sich in die Längsrichtung erstreckenden zweiten Seite (9) des Kontaktblechs (1) verbunden ist, so dass durch das Kontaktblech (1) der erste Teil (5) der Batteriezellen (2) über die ersten Pole (3) und der zweite Teil (8) der Batteriezellen (2) über die zweiten Pole (4) parallel und der erste Teil (5) der Batteriezellen (2) und der zweite Teil (8) der Batteriezellen (2) in Reihe geschaltet sind, und an der ersten Seite (7) zwischen benachbarten ersten Polen (3) und/oder an der zweiten Seite (9) zwischen benachbarten zweiten Polen (4) in dem Kontaktblech (1) wenigstens eine sich in Querrichtung erstreckende Aussparung (11, 12) in einer Länge vorgesehen ist, dass das Verhältnis des Widerstands des Kontaktblechs (1) in Erstreckung in Längsrichtung bezogen auf den Widerstand des Kontaktblechs (1) in Erstreckung in Querrichtung ≥ 5 ist.

## Beschreibung

### Technisches Gebiet

Die Erfindung betrifft ein Batteriemodul mit einer Mehrzahl Batteriezellen jeweils aufweisend einen ersten Pol und einen zweiten Pol und einem sich eine Querrichtung und in eine Längsrichtung erstreckenden Kontaktblech. Zudem betrifft die Erfindung ein Verfahren zum Reduzieren von Strömen in Längsrichtung eines sich in eine Querrichtung und in die Längsrichtung erstreckenden Kontaktblechs eines Batteriemoduls für ein Kraftfahrzeug, mit dem eine Mehrzahl Batteriezellen jeweils aufweisend einen ersten Pol und einen zweiten Pol verbindbar sind.

### Hintergrund der Erfindung

Nach jüngsten Schätzungen werden allein in Deutschland bis zum Jahr 2020 eine Million Elektrofahrzeuge erwartet, wobei der überwiegende Anteil rein elektrisch angetriebener Fahrzeuge in Flotten- und Car-Sharing-Anwendungen zu finden sein wird. Hinsichtlich der für den Betrieb der elektrisch angetriebenen Fahrzeuge, auch Elektroauto, E-Auto, E-Mobil oder Elektromobil genannt, notwendigen Batterien hat sich die Erkenntnis durchgesetzt, die Batterien aus einer Mehrzahl standardisierter Batteriezellen im Sinne eines "tailored assembly" anwendungsspezifisch zusammenzustellen, da dies kostengünstiger als der Einsatz angepasster Batteriezellen ist.

Eine solche Batterie weist in der Regel mehrere Batteriemodule auf, welche nebeneinander und/oder übereinander in der Batterie angeordnet sind. In den einzelnen Batteriemodulen sind eine Mehrzahl Batteriezellen in Zellhaltem mit Gehäuseschalen gehalten. Durch entsprechende Konfiguration und Anordnung lässt sich mit Kontaktblechen eine geeignete elektrische Verschaltung der Batteriezellen erreichen, um eine notwendige Spannung bzw. Batteriekapazität für gewünschte Anwendungen zu realisieren. In der Regel sind erste Pole eines Teils der Batteriezellen hintereinander mit einer Seite des Kontaktblechs und zweite Pole eines anderen Teils Batteriezellen ebenso hintereinander elektrisch mit einer zweiten Seite des Kontaktblechs verbunden, um einerseits den ersten Teil der Batteriezellen und den zweiten Teil der Batteriezellen in sogenannten Parallelsträngen jeweils parallel zu schalten und andererseits den ersten Teil der Batteriezellen und den zweiten Teil der Batteriezellen in Reihe zu schalten.

Zur platzsparenden Anordnung werden die zumeist zylinderförmigen Batteriezellen nach Art eines Dreiecks nebeneinander angeordnet, so dass immer zwei benachbarte Batteriezellen des eines Teils bzw. zweiten Teils benachbart zu einer Batteriezelle des zweiten bzw. ersten Teils in einer sogenannten Dreiecksverschaltung angeordnet sind. Durch die Dreiecksverschaltung können jedoch Ströme in Längsrichtung des Kontaktblechs zwischen den parallel geschalteten Batteriezellen entstehen, die in unvorteilhafter Weise die nutzbare Energie und die Lebensdauer des Batteriemoduls verringern. Zudem führen die Ströme zu unterschiedlichen Spannungsniveaus an den einzelnen Batteriezellen der Parallelstränge, wodurch ein verlässlicher Betrieb eines mittels des Batteriemoduls angetriebenen Fahrzeugs nicht sichergestellt und eine State-of-Health, SOH, Berechnung sowie Berechnung der Reichweite des Elektrofahrzeugs erschwert werden.

### Beschreibung der Erfindung

Ausgehend von dieser Situation ist es eine Aufgabe der vorliegenden Erfindung, ein Batteriemodul für ein Kraftfahrzeug mit einer Mehrzahl Batteriezellen und einem Kontaktblech anzugeben, bei dem Ströme zwischen Batteriezellen eines Parallelstrangs reduziert sind.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Batteriemodul für ein Kraftfahrzeug mit einer Mehrzahl Batteriezellen jeweils aufweisend einen ersten Pol und einen zweiten Pol und einem sich in eine Querrichtung und in eine Längsrichtung erstreckenden Kontaktblech, wobei
ein erster Teil der Batteriezellen mit dem jeweiligen ersten Pol nebeneinander mit einer sich in die Längsrichtung erstreckenden ersten Seite des Kontaktblechs verbunden ist und ein restlicher zweiter Teil der Batteriezellen mit dem jeweiligen zweiten Pol nebeneinander mit einer sich in die Längsrichtung erstreckenden zweiten Seite des Kontaktblechs verbunden ist, so dass durch das Kontaktblech der erste Teil der Batteriezellen über die ersten Pole parallel geschaltet ist, der zweite Teil der Batteriezellen über die zweiten Pole parallel geschaltet ist und der erste Teil der Batteriezellen und der zweite Teil der Batteriezellen in Reihe geschaltet sind, und
zwischen benachbarten ersten Polen, zwischen benachbarten zweiten Polen und/oder zwischen einem ersten Pol und einem benachbarten zweiten Pol in dem Kontaktblech wenigstens eine sich in Querrichtung erstreckende Aussparung mit einer Länge vorgesehen ist, dass aufgrund der Aussparung das Verhältnis des Widerstands des Kontaktblechs in Erstreckung in Längsrichtung bezogen auf den Widerstand des Kontaktblechs in Erstreckung in Querrichtung ≥ 2 ist.

Ein wesentlicher Punkt der Erfindung liegt in der Ausgestaltung des Kontaktblechs derart, dass des Widerstands des Kontaktblechs aufgrund der wenigstens einen Aussparung in Erstreckung in Längsrichtung ≥ 2 des Widerstands des Kontaktblechs in Erstreckung in Querrichtung ist. Durch Erhöhung des Widerstands in Längsrichtung des Kontaktblechs wird der aufgrund der mit dem Kontaktblech verbundenen Batteriezellen durch das Kontaktblech fließende Strom in Querrichtung kanalisiert, so dass ungewünschte Ströme in Längsrichtung nahezu oder vollständig eliminiert werden. Wie zuvor beschrieben entstehen bei einer sogenannten Dreiecksverschaltung der Batteriezellen mit dem Kontaktblech unerwünschte Ströme zwischen den in Längsrichtung mit dem Kontaktblech nacheinander verbundenen und derart parallel geschalteten Batteriezellen. Durch Einfügen der sich in Querrichtung erstreckenden Aussparung in das Kontaktblech lässt sich das vorgenannte Verhältnis zum Reduzieren der unerwünschten Ströme verwirklichen.

Insofern liegt ein Vorteil des Batteriemoduls darin, dass durch die vorgeschlagene Ausgestaltung des Kontaktblechs die nutzbare Energie der Batteriezellen erhöht und ebenso die Lebensdauer des Batteriemoduls verlängert wird. Da unterschiedliche Spannungsniveaus in den in dem ersten Teil und in dem zweiten Teil jeweils zu Parallelsträngen zusammengeschalteten Batteriezellen verringert und insbesondere eliminiert werden, ermöglicht das vorgeschlagene Batteriemodul einen sichereren Betrieb eines damit angetriebenen Kraftfahrzeugs, genauere State-of-Health und Reichweitenberechnungen.

Die Batteriezelle kann grundsätzlich beliebig ausgestaltet sein, beispielsweise eine beliebige Längsausdehnung und/oder Querausdehnung aufweisen. Bevorzugt weist die Batteriezelle eine zylindrische Bauform auf, beispielsweise mit einem Formfaktor 18650 mit einem Durchmesser von 18 mm als Querausdehnung und einer Höhe von 65 mm als Längsausdehnung. Ebenso lassen sich andere Batteriezellen beispielsweise mit Formfaktor 21700 verwenden. Der erste Pol ist bevorzugt als Pluspol und/oder an einer Deckelfläche und der zweite Pol als Minuspol und/oder an einer anderen, gegenüberliegenden Deckelfläche ausgestaltet bzw. angeordnet. Das Kontaktblech kann einteilig aus einem leitfähigen Material wie Metall gestaltet sein oder verschiedene Materiallagen umfassen.

Die Aussparung erstreckt sich bevorzugt in einem Winkel ≥ 0 Grad und ≤ 45 Grad zur Querrichtung des Kontaktblechs und kann insofern auch schräg zur Querrichtung verlaufen. Das Kontaktblech kann zwischen zwei benachbarten ersten Polen und zweiten Polen eine einzige sich zwischen der ersten Seite und der zweiten Seite erstreckenden Aussparung aufweisen oder eine Mehrzahl einzelner Aussparungen. Bevorzugt reicht die Aussparung an einen Rand des Kontaktblechs an der ersten Seite und/oder an der zweiten Seite heran ohne jedoch das Kontaktblech an dem Rand zu segmentieren. Derart verbleibt an dem Rand ein Streifen Kontaktblech zwischen zwei benachbarten ersten Polen und/oder zweiten Polen. In einem solchen Fall können nur an dem Streifen Ströme in Längsrichtung fließen. Die Aussparung kann sich durchgehend zwischen diesen Streifen als durchgehende Aussparung erstrecken oder in mehrere Teile segmentiert sein. Die Längsrichtung erstreckt sich bevorzugt parallel zur Längsachse des Kontaktblechs und weist eine größere Erstreckung als die senkrecht zu der Längsrichtung verlaufende Querrichtung auf. Benachbart zueinander bedeutet insbesondere nebeneinander oder unmittelbar nebeneinander angeordnet sein. Die Breite der Aussparung beträgt bevorzugt ≥ 0,3 mm und ≤ 5 mm.

Bevorzugt weist das Kontaktblech eine rechteckartige Erstreckung auf und/oder wird der Widerstand zum Bestimmen des Verhältnisses in Längsrichtung und/oder in Querrichtung entlang der gesamten Erstreckung in Längsrichtung und/oder in Querrichtung gemessen. Der erste Teil der Batteriezellen und/oder der zweite Teil der Batteriezellen sind bevorzugt in einer Reihe hintereinander angeordnet. Das Batteriemodul lässt sich insbesondere zum Antreiben eines als Elektroauto ausgeführten Kraftfahrzeugs oder für Stationärspeicher verwenden. Sofern eine Mehrzahl Batteriezellen in dem Batteriemodul vorgesehen sind, können diese in beliebiger Art elektrisch verschaltet sein, um entsprechend einer für den Betrieb eines Elektrofahrzeugs benötigte Spannung und/oder eine benötigte Batteriekapazität bereitzustellen.

In diesem Zusammenhang ist nach einer bevorzugten Weiterbildung vorgesehen, dass das Verhältnis des Widerstands des Kontaktblechs in Erstreckung in Querrichtung insbesondere zwischen zwei benachbarten Batteriezellen des ersten Teils oder des zweiten Teils bezogen auf den Widerstand des Kontaktblechs zwischen zwei benachbarten Batteriezellen des ersten Teils und/oder des zweiten Teils in Erstreckung in Längsrichtung ≥ 2 ist. Bevorzugt sind an dem Kontaktblech nur der erste Teil und der zweite Teil der Batteriezellen in Reihe geschaltet.

Grundsätzlich kann das Verhältnis einen beliebigen Wert ≥ 2 aufweisen. Nach einer besonders bevorzugten Weiterbildung ist das Verhältnis ≥ 5, ≥ 10, ≥ 20 oder ≥ 50, um Ströme in Längsrichtung des Kontaktblechs vollständig oder annähernd vollständig zu reduzieren.

Nach einer noch anderen bevorzugten Weiterbildung sind die Batteriezellen des ersten Teils in Längsrichtung versetzt zu den Batteriezellen des zweiten Teils angeordnet und/oder sind jeweils drei benachbarte Batteriezellen des ersten Teils und des zweiten Teils nach Art eines Dreiecks versetzt zueinander angeordnet. Beispielsweise sind jeweils zwei Batteriezellen des ersten Teils mit einer Batteriezelle des zweiten Teils benachbart nach Art eines Dreiecks angeordnet. Durch die versetzte Anordnung bzw. Anordnung nach Art eines Dreiecks ergibt sich insbesondere bei Batteriezellen mit einer zylinderartigen Form eine platzsparende Ausgestaltung.

In einer weiteren bevorzugten Ausführungsform sind jeweils drei benachbarte Batteriezellen des ersten Teils und des zweiten Teils nach Art eines Dreiecks versetzt zueinander angeordnet und zwischen den drei benachbarten Batteriezellen ist eine insbesondere runde erste Aussparung in dem Kontaktblech vorgesehen. Ein Zellhalter lässt sich an der ersten Aussparung befestigen. Zudem lässt sich durch die erste Aussparung das Kontaktblech gewichtsreduziert fertigen, was insbesondere bei einer Verwendung in einem Elektroauto vorteilhaft ist. Bevorzugt umfasst die Aussparung die erste Aussparung.

Nach einer noch weiteren bevorzugten Ausführungsform erstreckt sich, bei zwei Batteriezellen des ersten Teils, zum Ausbilden des Verhältnisses von der ersten Aussparung eine zweite insbesondere strichartige Aussparung zwischen den zwei Batteriezellen des ersten Teils in Richtung der ersten Seite und/oder von der ersten Aussparung eine dritte insbesondere strichartige Aussparung zwischen einer der beiden Batteriezelle des ersten Teils und der Batteriezelle des zweiten Teils und/oder zwischen der Batteriezelle des zweiten Teils und einer weiteren, benachbarten Batteriezelle des zweiten Teils in Richtung der zweiten Seite weg. Bevorzugt umfasst die Aussparung die zweite Aussparung und/oder die dritte Aussparung und/oder eine Kombination von erster Aussparung mit zweiter Aussparung und/oder dritter Aussparung.

Die zweite Aussparung und/oder die dritte Aussparung erstrecken sich insbesondere in Querrichtung und/oder in einem Winkel ≥ 0 Grad und ≤ 45 Grad zur Querrichtung des Kontaktblechs, um den Widerstand zwischen den einzelnen Batteriezellen des ersten Teils und des zweiten Teils zu vergrößern und derart eine Kanalisierung des zwischen den Batteriezellen des ersten Teils und des zweiten Teils fließenden Stroms in Querrichtung des Kontaktblechs zu bewirken. Die zweite Aussparung und/oder die dritte Aussparung kann sich linear, gebogen und/oder mit einem Knick mit einem Winkel ≥ 0 Grad und ≤ 45 Grad zwischen zwei linearen Bereichen erstrecken.

Bei einer dreieckartigen Anordnung der Batteriezellen sind die zweite Aussparung und/oder die dritte Aussparung bevorzugt so zwischen drei benachbarten im Dreieck angeordneten Batteriezellen vorgesehen, dass der Widerstand zwischen einem Paar der Batteriezellen, deren elektrische Verbindung des Kontaktblechs insbesondere nicht durch die zweite Aussparung und/oder die dritte Aussparung segmentiert ist, kleiner als der Widerstand zwischen wenigsten einem der beiden anderen Paaren ist, zwischen welchen die zweite Aussparung und/oder die dritte Aussparung vorgesehen ist. Mit anderen Worten kann durch Einbringen der zweiten Aussparung und/oder der dritten Aussparung die Querschnittsfläche des Kontaktblechs zwischen den betreffenden Batteriezellen verringert werden, wodurch sich der Widerstand des Kontaktblechs zwischen diesen betreffenden Batteriezellen erhöht. Der zwischen den Batteriezellen des ersten Teils und des zweiten Teils aufgrund der Serienschaltung der Batteriezellen fließende Strom wird entsprechend kanalisiert und fließt insbesondere zwischen Batteriezellen des ersten Teils und des zweiten Teils zwischen denen keine zweite Aussparung und/oder dritte Aussparung in das Kontaktblech eingebracht ist.

In einer anderen bevorzugten Weiterbildung teilt sich die zweite Aussparung und/oder die dritte Aussparung vor der ersten Seite und/oder der zweiten Seite in zwei Einzelaussparungen auf, die sich gegenüberliegend weg in Richtung der beiden Batteriezellen des ersten Teils und/oder der Batteriezelle des zweiten Teils und der weiteren, benachbarten Batteriezelle des zweiten Teils erstrecken. Die Einzelaussparungen können zusammen mit der zweiten Aussparung und/oder der dritten Aussparung in Draufsicht eine T-Form ausbilden und sich entsprechend von der zweiten Aussparung und/oder der dritten Aussparung gegenüberliegend in Verlängerung zueinander weg erstrecken. Ebenso können sich die Einzelaussparungen von der zweiten Aussparung und/oder der dritten Aussparung gegenüberliegend teilkreisförmig weg erstrecken. Durch die Einzelaussparungen kann an dem Rand des Kontaktblechs der Streifen Kontaktblech ausgebildet werden, durch welchen Ströme in Längsrichtung kanalisiert werden. Der Streifen erstreckt sich in Querrichtung bevorzugt ≥ 1 mm und ≤ 3 mm und in Längsrichtung ≥ 4 mm und ≤ 10 mm. Entsprechend erstrecken sich die zwei Einzelaussparungen in Längsrichtung bevorzugt ≥ 4 mm und ≤ 10 mm. Bevorzugt umfasst die zweite Aussparung und/oder die dritte Aussparung die Einzelaussparungen.

Gemäß einer noch anderen bevorzugten Weiterbildung weist das Kontaktblech zum Ausbilden des Verhältnisses bei drei benachbarten, drei Paare ausbildenden Batteriezellen des ersten Teils und des zweiten Teils zwischen einem Paar der benachbarten Batteriezellen des ersten Teils und des zweiten Teils eine zweite Aussparung und/oder dritte Aussparung insbesondere wie zuvor beschrieben auf, um den Widerstand des Kontaktblechs zwischen dem Paar gegenüber dem Widerstand zwischen den anderen Paaren insbesondere um das Verhältnis zu vergrößern.

Grundsätzlich kann das Kontaktblech eine beliebige Dicke aufweisen. Besonders bevorzugt weist das Kontaktblech eine Dicke von ≤ 1 mm, ≤ 0,5 mm oder ≤ 0,3 mm auf. Bevorzugt liegt die Dicke des Kontaktblechs im Bereich ≥ 0,3 mm und ≤ 0,5 mm, besonders bevorzugt bei 0,3 mm. Die erste Seite ist bevorzugt gegenüberliegend zu der zweiten Seite angeordnet, so dass sich die Batteriezellen des ersten Teils und des zweiten Teils von dem Kontaktblech weg in die gleiche Richtung und/oder parallel zueinander erstrecken. Bevorzugt sind die Batteriezellen des ersten Teils und des zweiten Teils jeweils an einem Rand des Kontaktblechs angeordnet.

Gemäß einer weiteren bevorzugten Ausführungsform weist das Kontaktblech an der ersten Seite und/oder an der zweiten Seite zwischen zwei benachbarten Batteriezellen eine sich von der ersten Seite und/oder der zweiten Seite in das Kontaktblech hinein erstreckende Materialaussparung auf. Die Materialaussparung weist bevorzugt eine teilkreisförmige oder teilkreisartige Form auf. Das Kontaktblech ist bevorzugt mittels eines Prägeverfahrens, Stanzverfahrens, Ätzverfahrens und/oder per Laser hergestellt. In analoger Weise sind die erste Aussparung, die zweite Aussparung, die dritte Aussparung, die Einzelaussparung und/oder Materialaussparung in vorteilhafter Weise und/oder während des Herstellens des Kontaktblechs durch vorgenanntes Prägeverfahrens, Stanzverfahrens, Ätzverfahren oder per Laser in das Kontaktblech eingebracht, um das Verhältnis ≥ 2 auszubilden.

Nach einer anderen bevorzugten Weiterbildung sind 8, 15 oder 22 Batteriezellen parallelgeschaltet und/oder eine Mehrzahl Kontaktbleche vorgesehen, mittels derer 5, 8 oder 13 Batteriezellen in Serie geschaltet sind. Bevorzugt sind an jeder Seite des Kontaktblechs jeweils 8, 15 oder 22 Batteriezellen parallel, hintereinander und/oder in gerader Linie mit dem Kontaktblech elektrisch verbunden, insbesondere mittels eines Widerstandsschweißverfahrens.

Die Aufgabe der Erfindung wird zudem durch ein Verfahren zum Reduzieren von Strömen in Längsrichtung eines sich in eine Querrichtung und in die Längsrichtung erstreckenden Kontaktblechs eines Batteriemoduls gelöst, mit dem eine Mehrzahl Batteriezellen jeweils aufweisend einen ersten Pol und einen zweiten Pol verbindbar sind, mit dem Schritt:
Einfügen wenigstens einer sich in Querrichtung des Kontaktblechs erstreckenden Aussparung zwischen wenigstens zwei designierten Verbindungspunkten, an denen die Batteriezellen mit ihren ersten Polen und/oder zweiten Polen mit dem Kontaktblech verbindbar sind, mit einer Länge, dass aufgrund der Aussparung das Verhältnis des Widerstand des Kontaktblechs in Erstreckung in Längsrichtung bezogen auf den Widerstand des Kontaktblechs in Erstreckung in Querrichtung ≥ 2 ist.

Das Einfügen der Aussparung erfolgt bevorzugt mittels eines Prägeverfahrens, Stanzverfahrens oder per Laser. Die Aussparung weist bevorzugt eine Breite von 0,5 mm, 1mm oder 2 mm auf, in der Material aus dem Kontaktblech entfernt ist. Das Kontaktblech ist bevorzugt aus einem leitenden Werkstoff, insbesondere Metall ausgeführt. Erstreckung in Querrichtung bzw. Erstreckung in Längsrichtung meint bevorzugt die gesamte Erstreckung des Kontaktblechs. Bevorzugt ist jedem Pol ein Verbindungspunkt zugeordnet. Bevorzugt ist die Aussparung als zuvor beschriebene zweite Aussparung, dritte Aussparung und/oder Einzelaussparung ausgeführt. Besonders bevorzugt verläuft die Aussparung parallel zur Querrichtung oder bis zu 45 Grad zu der Querrichtung des Kontaktblechs. Die Länge der Aussparung beträgt bevorzugt ≥ 30% und ≤ 95%, ≥ 50% und ≤ 90% oder ≥ 60% und ≤ 85% der Erstreckung des Kontaktblechs in Querrichtung.

Nach einer bevorzugten Weiterbildung umfasst das Verfahren den Schritt: Verbinden des jeweiligen ersten Pols eines ersten Teils der Batteriezellen nebeneinander mit den designierten Verbindungspunkten einer sich in die Längsrichtung erstreckenden ersten Seite des Kontaktbleches und Verbinden des jeweiligen zweiten Pols eines restlichen zweiten Teils der Batteriezellen nebeneinander mit den designierten Verbindungspunkten einer sich in Längsrichtung erstreckenden zweiten Seite des Kontaktbleches, so dass durch das Kontaktblech der erste Teil der Batteriezellen über die ersten Pole parallel geschaltet ist, der zweite Teil der Batteriezellen über die zweiten Pole parallel geschaltet ist und der erste Teil der Batteriezellen und der zweite Teil der Batteriezellen in Reihe geschaltet sind. Das Verbinden der Pole der Batteriezellen mit dem Kontaktblech erfolgt bevorzugt mittels Widerstandsschweißen.

In einer andern bevorzugten Weiterbildung umfasst das Verfahren den Schritt: Einfügen der wenigstens einen Aussparung zwischen den wenigstens zwei designierten Verbindungspunkten, so dass das Verhältnis des Widerstand des Kontaktblechs in Erstreckung in Querrichtung zwischen zwei benachbarten Batteriezellen des ersten Teils und des zweiten Teils bezogen auf den Widerstand des Kontaktblechs in Erstreckung in Längsrichtung zwischen zwei benachbarten Batteriezellen des ersten Teils oder des zweiten Teils ≥ 2 ist.

Weitere Ausführungen und Vorteile des Verfahrens ergeben sich für den Fachmann in Analogie zu dem zuvor beschriebenen Batteriemodul.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: ein Kontaktblech für ein Batteriemodul für ein Kraftfahrzeug mit damit verbundenen Batteriezellen gemäß dem Stand der Technik in schematischer Draufsicht,
- Fig. 2: ein Kontaktblech für ein Batteriemodul für ein Kraftfahrzeug mit damit verbundenen Batteriezellen gemäß einem bevorzugten Ausführungsbeispiel der Erfindung in schematischer Draufsicht, und
- Fig. 3: einen Ausschnitt des Kontaktblechs gemäß Fig. 2 ohne verbundene Batteriezellen gemäß dem bevorzugten Ausführungsbeispiel der Erfindung in schematischer Draufsicht.

### Detaillierte Beschreibung der Ausführungsbespiele

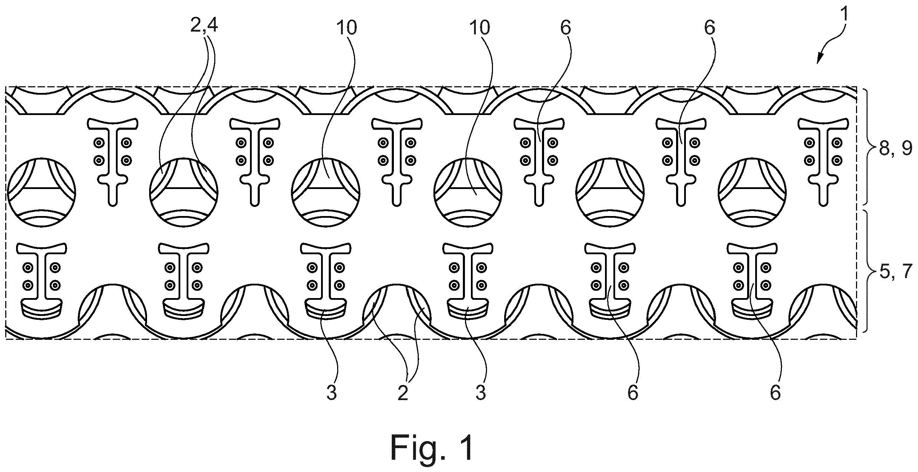

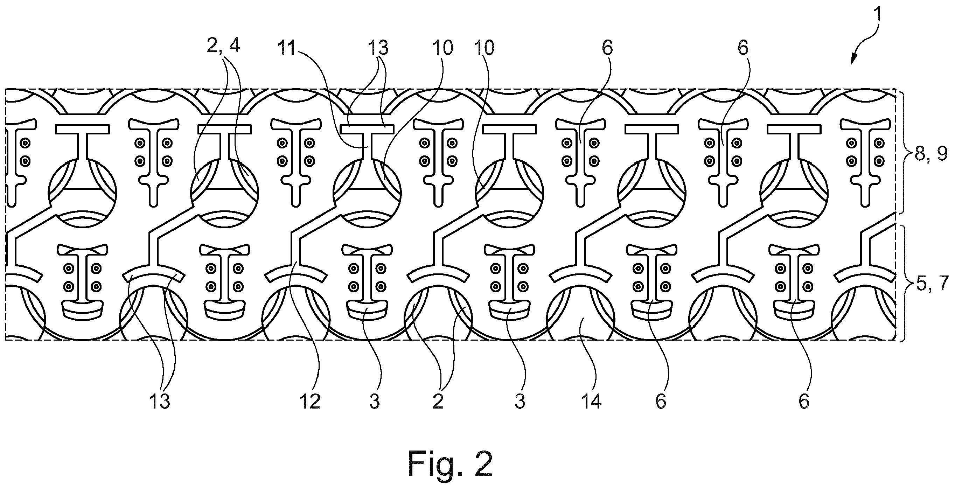

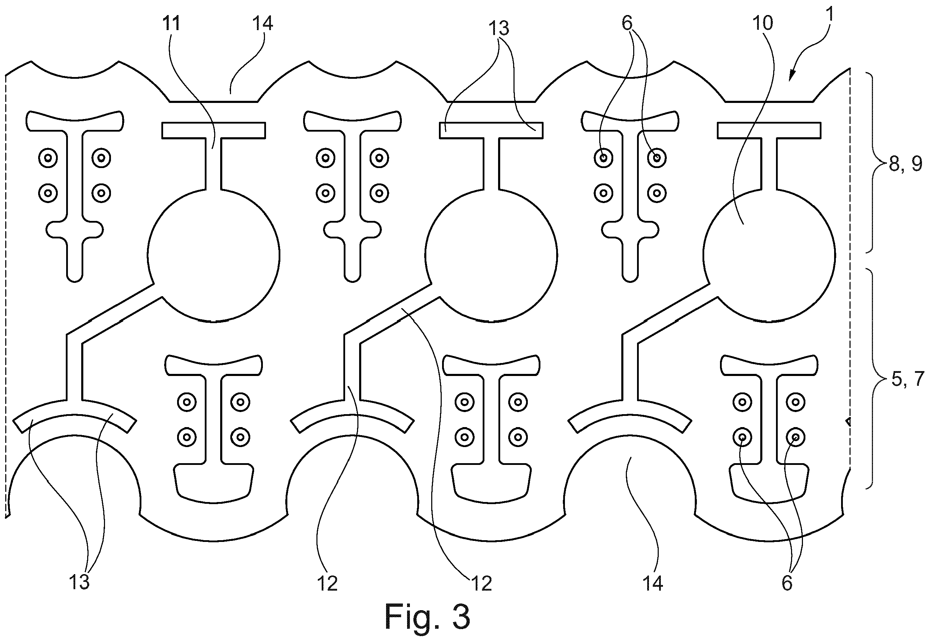

Fig. 1 zeigt ein Kontaktblech für ein Batteriemodul für ein Kraftfahrzeug mit damit verbundenen Batteriezellen gemäß dem Stand der Technik in schematischer Draufsicht. Fig. 2 zeigt ein Kontaktblech 1 für ein Batteriemodul zum Antreiben eines als Elektroauto ausgeführten Kraftfahrzeugs mit damit verbundenen Batteriezellen 2 in schematischer Draufsicht gemäß einem bevorzugten Ausführungsbeispiel der Erfindung, während Fig. 3 einen Ausschnitt des Kontaktblechs 1 gemäß Fig. 2 ohne verbundene Batteriezellen 2 gemäß dem bevorzugten Ausführungsbeispiel der Erfindung in schematischer Draufsicht zeigt. Die Batteriezellen 2 sind gemäß dem Formfaktor 18650 ausgeführt und weisen derart eine zylindrische Bauform mit einem Durchmesser von 18 mm als Querausdehnung und einer Längsausdehnung von 65 mm auf. Die Batteriezellen 2 weisen an ihren gegenüberliegenden Deckflächen jeweils einen ersten Pol 3, den Pluspol, und einen zweiten Pol 4, den Minuspol auf.

Das Kontaktblech 1 erstreckt sich in eine Querrichtung, vertikal in der Zeichnungsebene, und in eine Längsrichtung, horizontal in Zeichnungsebene. Ein erster Teil 5 der Batteriezellen 2 ist mit ihrem jeweiligen ersten Pol 3 mit in dem Kontaktblech 1 vorgesehenen jeweiligen Verbindungspunkten 6 und nacheinander in einer Reihe mit einer sich in die Längsrichtung erstreckenden ersten Seite 7 an einem Rand des Kontaktblechs 1 mittels eines Widerstandsschweißverfahrens elektrisch verbunden. In analoger Weise ist ein zweiter Teil 8 der Batteriezellen 2 ist mit ihrem jeweiligen zweiten Pol 4 mit jeweiligen Verbindungspunkten 6 und nacheinander in einer Reihe mit einer sich in die Längsrichtung erstreckenden zweiten Seite 9 an einem gegenüberliegenden Rand des Kontaktblechs 1 mittels des Widerstandsschweißverfahrens elektrisch verbunden.

Derart sind durch das Kontaktblech 1 der erste Teil 5 der Batteriezellen 2 über die jeweiligen ersten Pole 3 und der zweite Teil 8 der Batteriezellen 2 über die jeweiligen zweiten Pole 4 parallel und der erste Teil 5 der Batteriezellen 2 und der zweite Teil 8 der Batteriezellen 2 in Reihe geschaltet. Benachbarte Batteriezellen 2 des ersten Teils 5 und des zweiten Teils 8 sind zueinander versetzt nach Art eines Dreiecks angeordnet. Entsprechend ist benachbart zu jeweils zwei benachbarten Batteriezellen 2 des ersten Teils 5 oder des zweiten Teils 8 jeweils eine Batteriezelle 2 des zweiten Teils 8 oder des ersten Teils 5 angeordnet.

Durch diese sogenannte Dreiecksverschaltung der Batteriezellen 2 entstehen zwischen den Parallelsträngen der Batteriezellen 2 des ersten Teils 5 und den Batteriezellen 2 des zweiten Teils 8 ungewollte Ströme in Längsrichtung des Kontaktblechs, die zu weniger nutzbarer Energie führen und die Lebensdauer der Batteriezellen 2 und damit des Batteriemoduls verringern. Zudem führen die Ströme zu unerwünschten unterschiedlichen Spannungsniveaus an den Batteriezellen 2 der jeweiligen Parallelstränge, wodurch ein sicherer Betrieb eines mit einem aus dem Stand der Technik bekannten und wie in Fig. 1 gezeigten Batteriemodul angetriebenen Elektrofahrzeug nicht garantiert werden kann. Zudem erschweren die Ströme State-of-Health, SOH, Berechnungen und Berechnungen zur Reichweite des durch das Batteriemodul angetriebene Elektrofahrzeug.

Die unerwünschten Ströme in Längsrichtung lassen sich durch eine Kanalisierung der in dem Kontaktblech 1 fließenden Ströme reduzieren bzw. annährend vollständig reduzieren. Dazu wird das Kontaktblech 1 wie nachfolgend näher beschrieben mit einer Aussparung 11, 12, 13 versehen. Durch die nachfolgend beschriebene und in Fig. 2 und Fig. 3 gezeigte Aussparung 11, 12, 13, gebildet insbesondere durch die zweite Aussparung 11, die dritte Aussparung 13 und/oder die Einzelaussparungen 12, wird erreicht, dass das Verhältnis des Widerstands des Kontaktblechs 1 in Erstreckung in Längsrichtung bezogen auf den Widerstand des Kontaktblechs in Erstreckung in Querrichtung ≥ 2 und insbesondere ≥ 5 oder ≥ 10 ist.

Wie in den Figuren zu erkennen, ist zwischen jeweils drei benachbarten, das heißt nebeneinander angeordneten Batteriezellen 2 des ersten Teils 5 und des zweiten Teils 8 eine kreisrunde erste Aussparung 10 in dem Kontaktblech 1 vorgesehen. Zum Ausbilden des vorgenannten Verhältnisses erstrecken sich von den jeweiligen kreisrunden ersten Aussparungen 10 als vorgenannte Aussparungen jeweils zweite strichartige Aussparungen 11 mit einem Durchmesser von 1 bis 2 mm parallel zu der Quererstreckung des Kontaktblechs 1 in Richtung der zweiten Seite 9 bis auf Höhe der Verbindungspunkte 6 ohne jedoch bis zur zweiten Seite 9 zu reichen.

Im Bereich der Verbindungspunkte 6 verzweigen sich die zweiten strichartigen Aussparungen 11 jeweils in zwei strichartige Einzelaussparungen 12, die sich parallel zur Längserstreckung des Kontaktblechs 1 in Richtung der gegenüberliegenden Verbindungspunkte 6 erstrecken ohne jedoch bis zu den Verbindungspunkten 6 zu reichen. Die zwei Einzelaussparungen 12 erstrecken sich in Verlängerung zueinander und senkrecht zu der zweiten Aussparung 11, und bilden in Draufsicht derart eine T-Form aus, durch die das Kontaktblech 1 segmentiert ist.

Zudem erstrecken sich zum Ausbilden des vorgenannten Verhältnisses von den jeweiligen kreisrunden ersten Aussparungen 10 als Aussparungen jeweils dritte strichartige Aussparungen 12 mit einem Durchmesser von 1 bis 2 mm in einem Winkel von 45° zur Quererstreckung bzw. zur Längserstreckung des Kontaktblechs 1 in Richtung der ersten Seite 9. Die dritten Aussparungen 12 knicken im Bereich vor den Verbindungspunkten 6 um 45 Grad ab auf und verlaufen von dem Knick hin zu der Quererstreckung des Kontaktblechs 1 in Richtung der ersten Seite 7 bis auf Höhe der Verbindungspunkte 6 ohne jedoch bis zur ersten Seite 7 zu reichen.

Im Bereich der Verbindungspunkte 6 verzweigen sich die dritten Aussparungen 12 jeweils in zwei strichartige Einzelaussparungen 13, die sich in Längserstreckung des Kontaktblechs 1 gekrümmt in Richtung der gegenüberliegenden Verbindungspunkte 6 bis zu den Verbindungspunkten 6 erstrecken ohne jedoch bis zu den Verbindungspunkten 6 zu reichen. Die zwei Einzelaussparungen 13 erstrecken sich jeweils in Verlängerung zueinander kreisbogenartig parallel zu einer jeweiligen Materialaussparung 14, die an der ersten Seite 7 zwischen jeweils zwei benachbarten Batteriezellen 2 vorgesehen ist und sich von der ersten Seite 7 in das Kontaktblech 1 hinein erstreckt.

Das Kontaktblech weist eine Dicke von 0,3 mm auf, wobei das Kontaktblech 1 mittels eines Prägeverfahrens, Stanzverfahrens oder per Laser hergestellt ist. Entsprechend sind die ersten Aussparungen 10, die zweiten Aussparungen 11, die dritten Aussparungen 12 und die Einzelaussparungen 13 durch vorgenanntes Prägeverfahrens, Stanzverfahrens oder per Laser in das Kontaktblech 1 eingebracht worden, um die Aussparung 11, 12zum Realisierung des Verhältnisses ≥ 2 auszubilden.

Im Ergebnis lassen sich ungewünschte Ströme in Längsrichtung durch Einfügen der Aussparung in Querrichtung des Kontaktblechs 1 reduzieren bzw. vollständig vermeiden. Durch die erste zweite Aussparungen 11 und/oder die dritte Aussparung 12, insbesondere in Verbindung mit den Einzelaussparungen 13 und/oder der ersten Aussparung 10, wird der Widerstand des Kontaktblechs 1 in Längsrichtung bezogen auf die Querrichtung um das Verhältnis ≥ 2 vergrößert.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Kontaktblech | 1 |
| Batteriezelle | 2 |
| Erster Pol | 3 |
| Zweiter Pol | 4 |
| Erster Teil | 5 |
| Verbindungspunkte | 6 |
| Erste Seite | 7 |
| Zweiter Teil | 8 |
| Zweite Seite | 9 |
| Erste Aussparung | 10 |
| Aussparung, zweite Aussparung | 11 |
| Aussparung, dritte Aussparung | 12 |
| Aussparung, Einzelaussparung | 13 |
| Materialaussparung | 14 |

## Patentansprüche

1. Batteriemodul mit einer Mehrzahl Batteriezellen (2) jeweils aufweisend einen ersten Pol (3) und einen zweiten Pol (4) und einem sich in eine Querrichtung und in eine Längsrichtung erstreckenden Kontaktblech (1), wobei
ein erster Teil (5) der Batteriezellen (2) mit dem jeweiligen ersten Pol (3) nebeneinander mit einer sich in die Längsrichtung erstreckenden ersten Seite (7) des Kontaktblechs (1) verbunden ist und ein restlicher zweiter Teil (8) der Batteriezellen (2) mit dem jeweiligen zweiten Pol (4) nebeneinander mit einer sich in die Längsrichtung erstreckenden zweiten Seite (9) des Kontaktblechs (1) verbunden ist, so dass durch das Kontaktblech (1) der erste Teil (5) der Batteriezellen (2) über die ersten Pole (3) parallel geschaltet ist, der zweite Teil (8) der Batteriezellen (2) über die zweiten Pole (4) parallel geschaltet ist und der erste Teil (5) der Batteriezellen (2) und der zweite Teil (8) der Batteriezellen (2) in Reihe geschaltet sind,
jeweils drei benachbarte Batteriezellen (2) des ersten Teils (5) und des zweiten Teils (8) nach Art eines Dreiecks versetzt zueinander angeordnet sind und zwischen den drei benachbarten Batteriezellen (2) eine erste Aussparung (10) in dem Kontaktblech (1) vorgesehen ist, und
bei zwei Batteriezellen (2) des ersten Teils (5) von der ersten Aussparung (10) eine zweite Aussparung (11) zwischen den zwei Batteriezellen (2) des ersten Teils (5) in Richtung der ersten Seite (7) wegerstreckt und sich von der ersten Aussparung (10) eine dritte Aussparung (12) zwischen einer der beiden Batteriezellen (2) des ersten Teils (5) und der Batteriezelle (2) des zweiten Teils (8) und/oder zwischen der Batteriezelle (2) des zweiten Teils (8) und einer weiteren, benachbarten Batteriezelle (2) des zweiten Teils (8) in Richtung der zweiten Seite (9) wegerstreckt, so dass aufgrund der zweiten und dritten Aussparung (11, 12) das Verhältnis des Widerstands des Kontaktblechs (1) in Erstreckung in Längsrichtung bezogen auf den Widerstand des Kontaktblechs (1) in Erstreckung in Querrichtung ≥ 2 ist.

2. Batteriemodul nach dem vorhergehenden Anspruch, wobei das Verhältnis des Widerstands des Kontaktblechs (1) in Erstreckung in Längsrichtung zwischen zwei benachbarten Batteriezellen (2) des ersten Teils (5) oder des zweiten Teils (8) bezogen auf den Widerstand des Kontaktblechs (1) in Erstreckung in Querrichtung zwischen zwei benachbarten Batteriezellen (2) des ersten Teils (5) oder des zweiten Teils (8) ≥ 2 ist.

3. Batteriemodul nach einem der vorhergehenden Ansprüche, wobei das Verhältnis ≥ 5, ≥ 10, ≥ 20 oder ≥ 50 ist.

4. Batteriemodul nach einem der vorhergehenden Ansprüche, wobei die Batteriezellen (2) des ersten Teils (5) in Längsrichtung versetzt zu den Batteriezellen (2) des zweiten Teils (8) angeordnet sind und/oder jeweils drei benachbarte Batteriezellen (2) des ersten Teils (5) und des zweiten Teils (8) nach Art eines Dreiecks versetzt zueinander angeordnet sind.

5. Batteriemodul nach einem der vorhergehenden Ansprüche, wobei die erste Aussparung (10) rund ausgeführt ist und/oder die zweite Aussparung (11) und/oder die dritte Aussparung (12) strichartig ausgeführt ist.

6. Batteriemodul nach einem der vorhergehenden Ansprüche, wobei sich die zweite Aussparung (11) und/oder die dritte Aussparung (12) vor der ersten Seite (7) und/oder der zweiten Seite (9) in zwei Einzelaussparungen (13) aufteilt, die sich gegenüberliegend weg in Richtung der beiden Batteriezellen (2) des ersten Teils (5) und/oder der Batteriezelle (2) des zweiten Teils (8) und der weiteren, benachbarten Batteriezelle (2) des zweiten Teils (8) erstrecken.

7. Batteriemodul nach einem der vorhergehenden Ansprüche, wobei das Kontaktblech (1) eine Dicke von ≤ 1 mm, ≤ 0,5 mm oder ≤ 0,3 mm aufweist und/oder die erste Seite (7) gegenüberliegend zu der zweiten Seite (9) angeordnet ist.

8. Batteriemodul nach einem der vorhergehenden Ansprüche, wobei das Kontaktblech (1) an der ersten Seite (7) und/oder an der zweiten Seite (9) zwischen zwei benachbarten Batteriezellen (2) sich von der ersten Seite (7) und/oder der zweiten Seite (9) in das Kontaktblech (1) hinein erstreckende Materialaussparungen (14) aufweist.

9. Batteriemodul nach einem der vorhergehenden Ansprüche, wobei 8, 15 oder 22 Batteriezellen (2) parallelgeschaltet sind und/oder eine Mehrzahl Kontaktbleche (1) vorgesehen sind, mittels derer 5, 8 oder 13 Batteriezellen (2) in Serie geschaltet sind.

10. Verfahren zum Reduzieren von Strömen in Längsrichtung eines sich in eine Querrichtung und in die Längsrichtung erstreckenden Kontaktblechs (1) eines Batteriemoduls, mit dem eine Mehrzahl Batteriezellen (2) jeweils aufweisend einen ersten Pol (3) und einen zweiten Pol (4) verbindbar sind, wobei
ein erster Teil (5) der Batteriezellen (2) mit dem jeweiligen ersten Pol (3) nebeneinander mit einer sich in die Längsrichtung erstreckenden ersten Seite (7) des Kontaktblechs (1) verbunden ist und ein restlicher zweiter Teil (8) der Batteriezellen (2) mit dem jeweiligen zweiten Pol (4) nebeneinander mit einer sich in die Längsrichtung erstreckenden zweiten Seite (9) des Kontaktblechs (1) verbunden ist, so dass durch das Kontaktblech (1) der erste Teil (5) der Batteriezellen (2) über die ersten Pole (3) parallel geschaltet ist, der zweite Teil (8) der Batteriezellen (2) über die zweiten Pole (4) parallel geschaltet ist und der erste Teil (5) der Batteriezellen (2) und der zweite Teil (8) der Batteriezellen (2) in Reihe geschaltet sind, und jeweils drei benachbarte Batteriezellen (2) des ersten Teils (5) und des zweiten Teils (8) nach Art eines Dreiecks versetzt zueinander angeordnet sind, mit den Schritten:
Einfügen einer ersten Aussparung (10) zwischen den drei benachbarten Batteriezellen (2) in das Kontaktblech (1), Einfügen, bei zwei Batteriezellen (2) des ersten Teils (5), von der ersten Aussparung (10) eine zweite Aussparung (11) zwischen den zwei Batteriezellen (2) des ersten Teils (5) in Richtung der ersten Seite (7) und Einfügen von der ersten Aussparung (10) eine dritte Aussparung (12) zwischen einer der beiden Batteriezellen (2) des ersten Teils (5) und der Batteriezelle (2) des zweiten Teils (8) und/oder zwischen der Batteriezelle (2) des zweiten Teils (8) und einer weiteren, benachbarten Batteriezelle (2) des zweiten Teils (8) in Richtung der zweiten Seite (9) mit einer jeweiligen Länge derart, dass aufgrund der zweiten und dritten Aussparung (11, 12) das Verhältnis des Widerstand des Kontaktblechs (1) in Erstreckung in Längsrichtung bezogen auf den Widerstand des Kontaktblechs (1) in Erstreckung in Querrichtung ≥ 2 ist.

11. Verfahren nach dem vorhergehenden Verfahrensanspruch, mit dem Schritt:
Verbinden des jeweiligen ersten Pols (3) des ersten Teils (5) der Batteriezellen (2) nebeneinander mit den designierten Verbindungspunkten (6) der sich in die Längsrichtung erstreckenden ersten Seite (7) des Kontaktblechs (1) und Verbinden des jeweiligen zweiten Pols (4) des restlichen zweiten Teils (8) der Batteriezellen (2) nebeneinander mit den designierten Verbindungspunkten (6) der sich in Längsrichtung erstreckenden zweiten Seite (9) des Kontaktblechs (1).
